(19) Europäisches Patentamt
European Patent Office
Office européen des brevets

(11) Publication number: **0 325 779 A2**

(12) **EUROPEAN PATENT APPLICATION**

(21) Application number: 88121495.1

(22) Date of filing: 22.12.88

(51) Int. Cl.4: C08L 71/04 , C08L 25/06 , C08J 9/14 , B65D 81/34 , //(C08L71/04,25:06), (C08L25/06,71:04)

(30) Priority: 19.01.88 US 145783

(43) Date of publication of application: 02.08.89 Bulletin 89/31

(84) Designated Contracting States: DE FR GB IT NL

(71) Applicant: GENERAL ELECTRIC COMPANY
1 River Road
Schenectady New York 12305(US)

(72) Inventor: Allen, Richard Brian
East Washington Road
Hinsdale Massachusetts 01235(US)

(74) Representative: Catherine, Alain
General Electric France Service de Propriété Industrielle 18 Rue Horace Vernet B.P. 76
F-92134 Issy-les-Moulineaux Cédex(FR)

(54) **Microwavable foamed article and method of packaging.**

(57) Blends of polyphenylene ether and polystyrene resins can be foamed to provide low density foam packaging materials which are useful for packaging and storing foodstuffs and which are capable of containing the food during microwave cooking.

EP 0 325 779 A2

# MICROWAVABLE FOAMED ARTICLE AND METHOD OF PACKAGING

## Field of the Invention

Polyphenylene ether resin compositions can be foamed to provide low density articles suitable for use in packaging applications particularly those involving microwave cooking of food products.

## Background

Thermoplastic materials have gained widespread use in packaging applications, particularly those involving food products. The convenience food industry is especially interested in packaging materials which enable the user to cook the food directly in a microwave oven without the need to transfer the item to conventional microwave cookware. Such microwave ready packaging should provide a high modulus to weight ratio and allow cool-to-the-touch handling of cooked food. Additionally, it must offer sufficient rigidity at high temperature to support its contents after cooking. Cost of the packaging material is also an important selection criteria since preferred materials need to be readily disposable after use.

Copending U.S. Application S.N. 067,556, filed June 26, 1987 (Allen, et al.), which is incorporated herein by reference, provides low density extruded foam having high compressive strength, and describes a tandem extruder process for providing low density polyphenylene ether foam compositions.

It has now been discovered that polyphenylene ether resin compositions can be foamed to provide low density packaging materials and direct-to-microwave packaging applications. These foamed articles are of sufficiently high modulus and heat resistance to provide adequate rigidity and cool-to-the-touch handling. Furthermore, such polyphenylene ether compositions can be coextruded with optional protective, barrier, tie, and decorative layers especially to enhance resistance to fats, oils or greases. Low density polyphenylene ether foam compositions can be readily thermoformed into a variety of useful packaging materials (e.g. cartons) and cookware (e.g. plates, cups) articles.

## DESCRIPTION OF THE INVENTION

The present invention provides a method for providing a food packaging material which is capable of containing and storing food, as in shelf or freezer storage, and which can be utilized in microwave cooking applications to contain the heated food products.

A thermoplastic blend of polyphenylene ether and polystyrene resins are foamed, thereby providing a low density foam packaging material. The thermoplastic blend is generally comprised of 10 to 90 weight percent polyphenylene ether resin (PPE) and, correspondingly, 90 to 10 weight percent polystyrene resin. Preferably, about 10 to 50 weight percent polyphenylene ether resin will be utilized. Less than 10 weight percent PPE can be utilized in circumstances where only slight improvement over polystyrene foam may be required. The resins will be described in detail below. The foaming can be accomplished by any of several means such as with a thermoplastic foam extruder. In some instances it may be preferable to utilize a tandem line of extruders comprised of a first blending or compounding extruder and a second cooling extruder which contains the die head. Blowing agents such as the hydrofluorocarbons may be utilized. The foamed extrudate of an annular die may be sliced into sheets. This material is a low density foam packaging material which may be utilized directly (as for wrapping) or rolled for later processing (as by thermoforming). The low density foam will generally have a density of about 2 to 10 pounds per cubic foot. The low density foamed sheet will generally have a thickness of about 40 to 160 mils.

Next the low density foam material is formed into a shaped article suitable for packaging and microwave cooking. It will be recognized that such shaped articles suitable for packaging can take a wide variety of shapes to suit different requirements. Plates, bowls, cups, boxes, shallow and deep dishes, and sauce pans can all be successfully provided. Typically, the low density foam packaging material can be thermoformed or vacuum formed into any of these shaped articles, as well as many others. Such thermoforming can easily be accomplished by means of matched molds as is well known in the art.

It will readily apparent that the most desirable shaped articles will be those that are capable of being used for both the packaging and storage (e.g. shelf or freezer storage) of the food as well as for direct use as cookware in microwave ovens. Needless to say, the present invention also encompasses the possibility

that the shaped articles of packaging materials can be manufactured and sold separately from the food for later use by the consumer in a microwave oven.

A further embodiment of the present invention involves the actual cooking by microwave radiation of foodstuffs contained in the aforementioned low density foam packaging material. The cooking step exemplifies a key advantage of utilizing the combination of polyphenylene ether and polystyrene resins.

Microwave cooking is accomplished in conventional microwave ovens available for consumer use. Cooking times vary considerably depending upon the degree of cooking ("doneness") required for particular foods. Likewise, cooking temperatures will vary with power settings, quantity and type of chosen foods and moisture content of the food.

It is required that the packaging/cookware be adequate for cooking the food to the desired degree without failing. It will be seen that conventional polystyrene may be suitable for a few types of foods but that it fails for many others. It will also be seen that low density foam packaging materials made of polyphenylene ether and polystyrene resins in combination are vastly superior to styrene alone for a wide variety of foods.

As mentioned above, an essential feature of the low density foam packaging material of the present invention is the combination of polyphenylene ether and polystyrene resins in a manner which facilitates the storage and microwave cooking of food products. Modern packaging products, including those utilizing conventional polystyrene foams often are multilayer composites of several materials, each layer generally providing some specific desirable property. Thus, foam packaging materials of this invention can be combined with protective, tie, barrier or decorative layers or coatings by melt coating or lamination processes. Coextrusion processes which provide a multilayer structure may also be utilized so long as the underlying foam cell structure is not damaged as a result.

If a multilayer packaging structure is desired in connection with the low density foam material used herein, it is preferred that the additional layer is a film or sheet of solid thermoplastic. Most preferred would be a layer of impact polystyrene or a blend of impact polystyrene and polyphenylene ether resin. Impact polystyrene is generally rubber modified polystyrene which exhibits better impact properties than unmodified polystyrene which is also known as crystal polystyrene or polystyrene homopolymer. Parenthetically, it may be pointed out that it is unmodified or crystal polystyrene which is utilized in the low density foam material described elsewhere in the specification.

Aside from the aforementioned preferred solid thermoplastic layer it would also be possible to utilize a solid crystal polystyrene layer or blend of the same with polyphenylene ether resin. A second alternative solid thermoplastic could be polyolefin sheet or film such as polyethylene or polypropylene.

It is contemplated that the present invention also encompasses shaped articles of the low density foam packaging material comprised of polyphenylene ether and polystyrene resin, and multilayer resin of these packaging materials. Likewise, the use of the these materials in microwave cooking applications is also envisioned.

The polyphenylene ethers (also known as polyphenylene oxides) used in the present invention are a well known class of polymers widely used in industry. Since their discovery, they have given rise to numerous variations and modifications but still may, as a class, be generally characterized by the presence of aryleneoxy structural units. The present invention includes all of said variations and modifications, including but not limited to those described hereinafter.

The polyphenylene ethers generally comprise structural units having formula

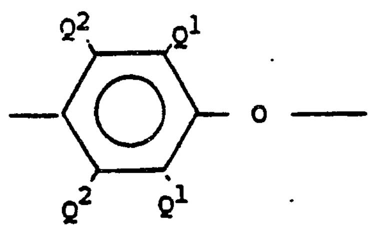

In each of said units independently, each $Q^1$ is independently hydrogen, halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylbutyl, n-hexyl, 2,3-dimethylbutyl, 2-, 3- or 4-methylpentyl and the corresponding heptyl groups.

Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen.

Suitable polyphenylene ethers are disclosed in a large number of patents. A recent patent to Hallgren et al., U.S. 4,678,839, incorporated herein by reference, provides a useful survey of polyphenylene ether chemistry and processing and references a large number of related patents.

Both homopolymers and copolymers are included. Suitable homopolymers are those containing, for example, 2,6-dimethyl-1,4-phenylene ether units. Suitable copolymers include random copolymers containing such units in combination with (for example) 2,3,6-trimethyl-1,4-phenylene ether units. Many suitable random copolymers, as well as homopolymers, are disclosed in various patents. Also contemplated are graft copolymers, including those prepared by grafting onto the polyphenylene ether chain such vinyl monomers as acrylonitrile and vinylaromatic compounds (e.g., styrene), and polymers such as polystyrenes and elastomers. Other suitable polymers are the coupled polyphenylene ethers in which the coupling agent is reacted with the hydroxy groups of two polyphenylene ether chains to increase the molecular weight of the polymer. Illustrative coupling agents are low molecular weight polycarbonates, quinones, heterocycles and formals.

The polyphenylene ether generally has a weight average molecular weight in the range of about 10,000-75,000 and number average molecular weight, as determined by gel permeation chromatography within the range of about 5,000-40,000; its intrinsic viscosity is most often in the range of about 0.40-0.5 dl./g., as measured in chloroform at 25 degrees centigrade.

The polyphenylene ethers may be prepared by known methods, typically by the oxidative coupling of at least one corresponding monohydroxyaromatic compound. A particularly useful and readily available monohydroxyaromatic compound is 2,6-xylenol (wherein each $Q^1$ is methyl and each $Q^2$ is hydrogen), whereupon the polymer may be characterized as a poly(2,6-dimethyl-1,4-phenylene ether).

Any of the various catalyst systems known in the art to be useful for the preparation of polyphenylene ethers can be used in preparing those employed in this invention. For the most part, they contain at least one heavy metal compound such as a copper, manganese or cobalt compound, usually in combination with various other materials.

A first class of preferred catalyst systems consist of those containing copper. Such catalysts are disclosed, for example, in the aforementioned U.S. Pat. Nos. 3,306,874, 3,306,875, 3,914,266 and 4,928,341. They are usually combinations of cuprous or cupric ions, halide (i.e., chloride, bromide or iodide) ions and at least one amine.

Manganese-containing systems constitute a second preferred class of catalysts. They are generally alkaline systems containing divalent manganese and such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, w-hydroxyoximes(monomeric and polymeric) o-hydroxyaryl oximes and B-diketones. Also useful are cobalt-containing catalyst systems.

As has been shown in many patents beginning with U.S. 3,383,435 (Cizek), polyphenylene ethers are miscible in all proportions with alkenyl aromatic resins thereby providing a class of thermoplastic resins known as modified-PPE. These styrene resins are those derived from the polymerization of monovinyl aromatic monomers. The foam packaging materials of the present invention will preferably utilize polystyrene homopolymer resins, also known as unmodified or crystal polystyrene to distinguish it from substituted styrenes and impact grades of polystyrene. Crystal polystyrene is commercially available in pellet form from a variety of sources including Huntsman Chemical Company.

The following examples describe, without limitation, the preparation and use of low density foam packaging material comprised of polyphenylene ether and polystyrene resins. It will be readily seen that a wide variety of packaging materials can be prepared depending upon desired end-uses of the product. Furthermore, the utility of these materials in microwave cooking applications is clearly demonstrated by the data contained in Table 2.

All patents and applications mentioned herein are incorporated by reference.

## Examples

Blends of polyphenylene ether and polystyrene resins were prepared. Low density foam sheet of each material were thermoformed in the shape of plates, trays or shallow dishes to test the suitability of each in

microwave cooking applications. Comparisons were undertaken against conventional crystal polystyrene (polystyrene homopolymer) cookware.

The polyphenylene ether and polystyrene resins, in the proportions indicated in Table 1, were directed to the feed throat of a tandem line low density foam extruder available from Egan Machinery Company. The primary extruder (2.5 inch) was followed by a 3.5 inch cooling extruder. A conventional foam screw design was used and FREON 12 fluorocarbon was used as the blowing agent. Melt temperatures ranged from 480 degrees to 500 degrees Fahrenheit in the primary extruder, and 330 to 340 degrees Fahrenheit in the cooling extruder. The die pressure was maintained at 4000 psi and the mandrel temperature was 120 degrees Fahrenheit. Low density foam material was produced at a rate of 140 to 220 lbs. per hour.

Low density foam cookware articles were provided by a thermoforming process utilizing matched metal dies at 140 degrees Fahrenheit for a cycle time of 6 seconds. The total residence time for the resin in the preheat oven was 30 seconds. The low density resins were found to have an expansion rate (puff) of 80 to 100%. It will be recognized that the foregoing conditions are similar to processing conditions for conventional polystyrene resins.

Table 1

| Foam Property Profiles | | | |
|---|---|---|---|
| Composition (weight percents) | Example 1 | Example 2 | Control |
| Polyphenylene ether resin [a] | 25% | 40% | -- |
| Polystyrene resin [b] | 75% | 60% | 100% |
| Property | | | |
| density ($lbs/ft^3$ | 3.1 | 2.9 | 5.7 |
| cells/inch | 224 | 240 | 144 |
| % open cells | 15% | -- | 10% |
| heat resistance (degrees C) | 110 | 123 | 97 |
| NOTES: | | | |

a) poly(2,6-dimethyl-1,4-phenylene ether) resin powder, PPO® resin, General Electric Company
b) crystal polystyrene homopolymer pellets

Microwave testing of the low density foam materials was undertaken in a conventional microwave oven suitable for consumer use for home cooking. The microwave oven used was General Electric Model No. JET214 having a power rating of 1250 Watts. Test methods outlined in the Single Service Institute Guidelines For Testing Disposables In Microwave Ovens were followed.

Several food groups, as indicated in Table 2, were cooked under identical conditions. Manufacturer's microwave cooking directions were followed when available.

The results reported in Table 2 indicate that in this series of tests the blends containing 25 and 40 percent polyphenylene ether blends performed comparably, and both of these blends significantly outperformed the 100 percent styrene material. The general mode of failure was melt-through of the foam by the heated food product or its associated grease or oils. It will be seen that none of these foam materials were able to successfully contain the heated bacon. It is proposed, however, that foam packaging materials containing greater proportions of polyphenylene ether resin (e.g. up to 90 weight percent) should be adequate to contain high heat-content items such as bacon and bacon grease.

It should be evident from the foregoing that low density foam compositions of polyphenylene ether and polystyrene resins are particularly effective for packaging certain food products which require cooking by microwave radiation.

TABLE 2

| MICROWAVE PERFORMANCE | | | | | |
|---|---|---|---|---|---|
| FOOD CATEGORY | COOKING TIME (MIN) | REHEAT TEMP (F) | 40% PPE 60% STYRENE | 25% PPE 75% STYRENE | 100% STYRENE |
| Muffins | 1 1/2 | 120-150 | PASS | PASS | PASS |
| Frozen Broccoli | 8 | 150-180 | PASS | PASS | PASS |
| Pizza | 10 | 180-205 | PASS | PASS | FAIL |
| Margarine | 3 | 205-220 | PASS | PASS | FAIL |
| Frozen Fried Chicken | 10 | 220-250 | PASS | PASS | FAIL |
| Bacon | 5 | 250 | FAIL | FAIL | FAIL |
| Refrigerated Chicken | 15 | PRIMARY COOKING | PASS | PASS | FAIL |

## Claims

1. A method for providing food packaging material capable of containing food during microwave cooking, comprising the steps of:
foaming a thermoplastic blend or polyphenylene ether and polystyrene resins to provide a low density foam packaging material; forming a shaped article of said packaging material capable of receiving one or more food items.

2. A method as in Claim 1 wherein said thermoplastic blend is comprised of about 10 to 90 weight percent polyphenylene ether resin and correspondingly about 90 to 10 weight percent polystyrene resin.

3. A method as in Claim 2 where said thermoplastic blend is comprised of about 10 to 50 weight percent polyphenylene ether resin and correspondingly about 90 to 50 weight percent polystyrene resin.

4. A method as in Claim 1 wherein said foaming step is accomplished in a thermoplastic foam extruder.

5. A method as in Claim 4 where said foaming step utilizes a fluorocarbon blowing agent.

6. A method as in Claim 1 wherein the low density foamed packaging material has a density of about 2 to 10 pounds per cubic foot.

7. A method as in Claim 1 wherein the foamed packaging material has a thickness of about 40 to 160 mils.

8. A method as in Claim 1 wherein the shaped article of packaging material is formed by thermoforming or vacuum forming.

9. A method as in Claim 1 further comprising the step packaging one or more food items in the shaped article of low density foam packaging material.

10. A method as in Claim 9 wherein said packaging is effective for shelf or freezer storage of the food items.

11. A method as in Claim 9 further comprising the step of heating the food contents of the shaped packaging material with microwave radiation.

12. A method as in Claim 11 wherein the food contents of the shaped packaging material are heated to a temperature up to about 250F.

13. A method as in Claim 11 wherein said microwave cooking is conducted for a period up to about 15 minutes.

14. A shaped article of low density foam packaging material made by the process of Claim 1.

15. A method as in Claim 1 wherein said low density foam packaging material is further laminated with a solid thermoplastic film or sheet, thereby providing a multilayer packaging material.

16. A method as in Claim 15 wherein said solid thermoplastic is polystyrene resin, impact polystyrene resin or blends of these with polyphenylene ether resin.

17. A method as in Claim 15 wherein said solid thermoplastic is polyolefin.

18. A multilayer shaped article for packaging made by the process of Claim 15.